# EUROPEAN PATENT SPECIFICATION

(11) **EP 3 360 730 B1**
(45) Date of publication and mention of the grant of the patent: **14.08.2019**
(21) Application number: 18156174.7
(22) Date of filing: 09.02.2018
(51) Int. Cl.: B60R 1/00

(54) **SURVEILLANCE SYSTEM FOR DOORS OF A VEHICLE**
ÜBERWACHUNGSSYSTEM FÜR TÜREN EINES FAHRZEUGS
SYSTÈME DE SURVEILLANCE POUR LES PORTES D'UN VÉHICULE

(30) Priority: 10.02.2017 IT 201700014880
(43) Date of publication of application: 15.08.2018
(73) Proprietor: IVECO FRANCE S.A.S., 69200 Vénissieux (FR)
(72) Inventor: CODRON, Stephane, 69008 LYON (FR)
(74) Representative: Bongiovanni, Simone

(56) References cited:
- EP-A1- 1 100 050
- EP-A1- 2 801 956
- JP-A- H11 175 782

## Description

The present invention relates to a surveillance system for doors of a vehicle, in particular a surveillance system for doors of a public passenger transport vehicle.

Public passenger transport vehicles usually comprise surveillance systems for doors, as disclosed in documents EO2801956 A1, EP1100050 A1 or JPH11175782 A.

The aforementioned systems comprise means of monitoring the flow of passengers, for example cameras located at each door or interior mirrors, configured to allow the operator to monitor each door to ensure that passengers can enter or exit the vehicle.

The monitoring systems may also comprise sensors, for example radars, configured to detect the presence of people, for example cyclists, along the side walls of the vehicle below the blind spot of the rear-view mirrors when the vehicle is in motion.

However, the above-mentioned monitoring systems have several disadvantages.

For example, the sensors are not configured to distinguish between a person and other objects, for example a pole or a tree.

The driver could thus be tempted to disable the means of surveillance if it receives too many false alarms.

It is thus still necessary to improve surveillance systems for doors of a public passenger transport vehicle in order to enhance its reliability and flexibility.

The object of this invention is to resolve the above-mentioned problems.

The above-mentioned objects are achieved by a surveillance system for doors of a vehicle according to claim 1.

Other characteristics and advantages of the invention will become apparent from the following non-limiting description, provided for illustrative purposes, with reference to the attached drawings, in which:
- Figure 1 is a schematic view of a public passenger transport vehicle comprising a surveillance system according to the present invention in a first operating step; and
- Figure 2 is a schematic view of a public passenger transport vehicle comprising a surveillance system according to the present invention in a second operating step.

The following description, for the sake of clarity and in a non-limiting manner, refers to a bus and is suitable to be applied to other types of road vehicles.

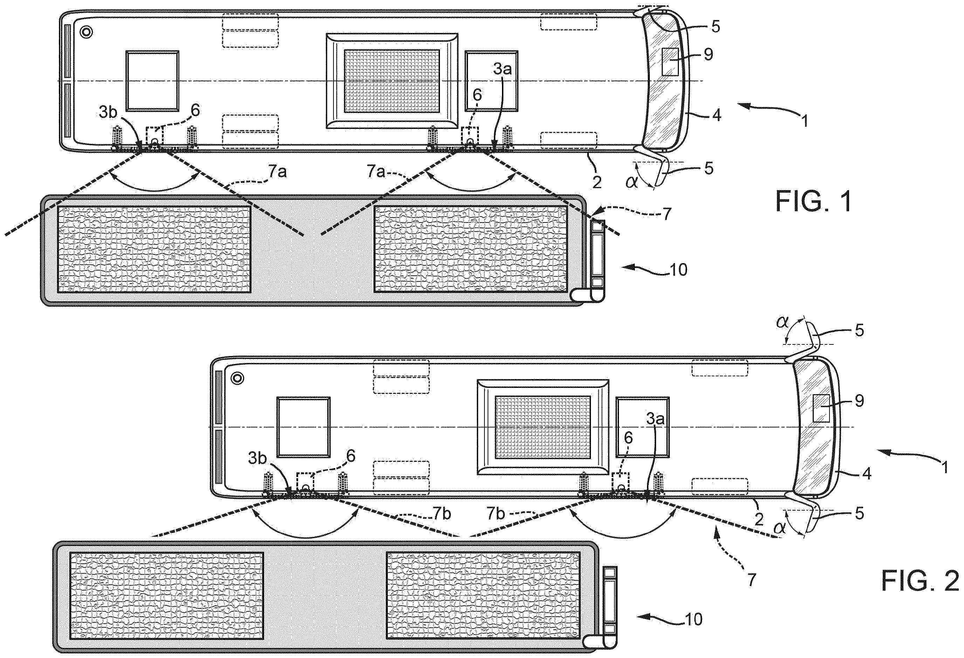

Figures 1 and 2 illustrate a bus 1 of known type comprising, on at least one of its side walls 2, at least one door 3. In the case described the vehicle 1 comprises two doors, a front door 3a and a rear door 3b.

The bus 1 also comprises a pair of rear-view mirrors 5 positioned laterally with respect to the driver's cab 4 and configured to allow the driver of the bus 1 to have a rear view for operating the bus 1. The rear-view mirrors 5 comprise a blind spot angle α, below which it is impossible for the driver to see.

The bus comprises a surveillance system for the doors 3, which essentially comprises, for each of the doors 3, a camera 6 configured to acquire a visual area 7 in the vicinity of each of the doors 3.

The cameras 6 are preferably configured so that their depth of field is variable, therefore the above-mentioned visual area 7 may vary depending on the setting of the depth of field.

The depth of field can beneficially vary between a first depth of field so as to see a first area 7a, thus acquiring the images of passengers entering/exiting the vehicle 1, and a second depth of field so as to see a second area 7b, thus detecting the presence of people alongside the vehicle 1.

The second area 7b is beneficially larger than the first area 7a. The areas 7a of each of the cameras 6 are configured to be separate from each other, whereas the areas 7b of each of the cameras 6 are configured to overlap each other.

The cameras 6 are preferably connected to a control unit (not shown) configured to modify the said area 7 automatically as a function of an operational status of the vehicle 1 or manually based on the choice of the driver of the vehicle 1.

The control unit is also configured to process the images acquired by the cameras 6 in order to count the number of passengers who enter/exit the vehicle 1 and recognise individuals along a side wall of the vehicle 1 when the latter is in motion.

The control unit for the cameras 6 may be integrated into the vehicle's ECU (Electronic Control Unit).

Finally, the vehicle comprises, in the driver's cab 4, display means 9 configured to display images from the cameras 6 or information processed from said images.

The operation of the surveillance system for the doors of a public passenger transport vehicle is the following.

Figure 1 shows a first operating step of the surveillance system wherein the vehicle 1 is stopped at a stop station 10.

In this step the control unit adjusts the depth of field of the cameras 6 in order to see the first zone 7a, which makes it possible to zoom in on the bottom of the door and on part of the platform of the station 10.

The images acquired by the cameras 6 are processed by the control unit which is configured to calculate the number of passengers who enter and/or exit the vehicle 1. The number is updated at each bus stop and stored so that the actual number of passengers in the vehicle is known.

The control unit is also configured to permit or preclude opening of one of the doors 3 based on the number of passengers present in the queue.

For example, if, thanks to the images from the cameras 6, the control unit detects that there are too many passengers in front of the door 3b (in the vehicle 1 or on the platform of the station 10), it will only allow opening of the door 3a or it will allow opening of the door 3a before opening of the door 3b in order to try to manage the flow of passengers who enter or exit the vehicle 1.

Beneficially, lights or other signalling means (not shown) may indicate to passengers the door which will open first in order to manage the flow.

Figure 2 shows a second operating step of the surveillance system wherein the vehicle 1 is in motion.

In this step the control unit adjusts the depth of field of the cameras 6 in order to see the second zone 7b, which makes it possible to zoom in laterally on the side wall 2.

The images acquired by the cameras 6 are processed by the control unit for the cameras which is configured to detect the presence of a person along the side wall 2.

During the two operating steps, the images acquired by the cameras can be viewed on the viewing means 9.

It is also possible to view on the latter the number of passengers aboard the vehicle 1 and a warning message if a person is detected along the side wall of the vehicle 1 below the blind spot angle α when the vehicle 1 is in motion.

From the foregoing, the benefits of a surveillance system for doors of a vehicle according to the present invention are apparent.

The surveillance system makes it possible to monitor concurrently the space in the vicinity of the doors 3 during the steps of entering/exiting the vehicle 1 and along the side wall 2 of the vehicle 1 while the latter is in motion.

In addition, the surveillance system makes it possible to know the number of passengers aboard the vehicle 1.

Thanks to the processing of the images acquired by the cameras 6, the driver can evaluate if a warning message for the possible presence of a person along the side wall 2 of the vehicle 1 is important and act accordingly.

By using cameras 6 with a variable depth of field and thanks to the electronic processing that can be carried out by the vehicle's ECU, the surveillance system is therefore simple and cost-effective.

Finally, it is apparent that the surveillance system for doors of a vehicle according to the present invention may be subject to modifications and variations without thereby departing from the protective scope of the claims.

## Claims

1. A road vehicle (1) for the public transport of passengers comprising a plurality of doors (3) of said vehicle through which the passengers may enter or exit said vehicle (1), each of said doors (3) being provided with a camera (6), **characterised in that** said cameras(6) have a variable depth of field between at least a first depth of field, to see a first area (7a) and capture the images of the passengers that enter/exit the vehicle (1), and a second depth of field to see a second area (7b) to detect the presence of people alongside the vehicle (1).

2. The vehicle according to claim 1, **characterised in that** said second area (7b) is larger than said first area (7a) .

3. The vehicle according to claim 1 or 2, **characterised in that** said first areas (7a) of each of said doors are separate from one another.

4. The vehicle according to claim 1 or 2, **characterised in that** said second areas (7b) of each of said doors are superimposed on one another.

5. The vehicle according to one of the previous claims, **characterised in that** the vehicle comprises an electronic unit configured to control the change in depth of field as a function of the operating conditions of the vehicle (1).

6. The vehicle according to one of the previous claims, **characterised in that** the vehicle (1) comprises an electronic unit configured to process the images captured by said camera (6) to count the number of passengers that enter/exit the vehicle (1).

7. The vehicle according to one of the previous claims, **characterised in that** the vehicle (1) comprises an electronic unit configured to process the images captured by said camera (6) to allow the recognition of people along a side wall (2) of the vehicle (1) when the latter is in motion.

8. The vehicle according to one of the claims 5 to 7, **characterised in that** said electronic control unit is the ECU of the vehicle.

## Patentansprüche

1. Straßenfahrzeug (1) für den öffentlichen Transport von Fahrgästen, umfassend eine Mehrzahl von Türen (3) des Fahrzeugs, durch welche die Fahrgäste das Fahrzeug (1) betreten oder verlassen können, wobei jede der Türen (3) mit einer Kamera (6) ausgestattet ist, **dadurch gekennzeichnet, dass** die Kameras (6) unterschiedliche Schärfentiefen aufweisen, zwischen einer ersten Schärfentiefe zum Überblicken eines ersten Bereichs (7a) und zur Aufnahme von Bildern von Fahrgästen, welche das Fahrzeug (1) betreten/verlassen, und einer zweiten Schärfentiefe zum Überblicken eines zweiten Bereichs (7b) zum Detektieren der Präsenz von Personen entlang des Fahrzeugs (1).

2. Fahrzeug gemäß Anspruch 1, **dadurch gekennzeichnet, dass** der zweite Bereich (7b) größer ist als der erste Bereich (7a).

3. Fahrzeug gemäß Anspruch 1 oder 2, **dadurch gekennzeichnet, dass** die ersten Bereiche (7a) von jeder der Türen voneinander getrennt sind.

4. Fahrzeug gemäß Anspruch 1 oder 2, **dadurch gekennzeichnet, dass** die zweiten Bereiche (7b) von jeder der Türen einander überlappen.

5. Fahrzeug gemäß einem der vorhergehenden Ansprüche, **dadurch gekennzeichnet, dass** das Fahrzeug eine elektronische Einheit umfasst, dazu ausgebildet, die Veränderung der Schärfentiefe als eine Funktion der Betriebszustände des Fahrzeugs (1) zu verändern.

6. Fahrzeug gemäß einem der vorhergehenden Ansprüche, **dadurch gekennzeichnet, dass** das Fahrzeug (1) eine elektronische Einheit umfasst, dazu ausgebildet, die Bilder zu verarbeiten, die von der Kamera (6) aufgenommen werden, um die Anzahl von Fahrgästen zu zählen, welche das Fahrzeug (1) betreten/verlassen.

7. Fahrzeug gemäß einem der vorhergehenden Ansprüche, **dadurch gekennzeichnet, dass** das Fahrzeug (1) eine elektronische Einheit umfasst, dazu ausgebildet, die Bilder zu verarbeiten, die durch die Kamera (6) aufgenommen werden, um eine Erkennung von Personen entlang einer Seitenwand (2) des Fahrzeugs (1) zu ermöglichen, wenn sich letzteres in Bewegung befindet.

8. Fahrzeug gemäß einem der Ansprüche 5 bis 7, **dadurch gekennzeichnet, dass** die elektronische Steuereinheit die ECU (elektronische Steuereinheit) des Fahrzeugs ist.

## Revendications

1. Véhicule routier (1) pour le transport public de passagers comprenant une pluralité de portes (3) dudit véhicule à travers lesquelles les passagers peuvent entrer ou sortir dudit véhicule (1), chacune desdites portes (3) étant pourvue d'une caméra (6), **caractérisé en ce que** lesdites caméras (6) ont une profondeur de champ variable entre au moins une première profondeur de champ, pour voir une première zone (7a) et capturer les images des passagers qui entrent/sortent dudit véhicule (1), et une seconde profondeur de champ pour voir une seconde zone (7b) afin de détecter la présence de personnes le long du véhicule (1).

2. Véhicule selon la revendication 1, **caractérisé en ce que** ladite seconde zone (7b) est plus grande que ladite première zone (7a).

3. Véhicule selon la revendication 1 ou 2, **caractérisé en ce que** lesdites premières zones (7a) de chacune desdites portes sont séparées les unes des autres.

4. Véhicule selon la revendication 1 ou 2, **caractérisé en ce que** lesdites secondes zones (7b) de chacune desdites portes sont superposées les unes sur les autres.

5. Véhicule selon l'une des revendications précédentes, **caractérisé en ce que** le véhicule comprend une unité électronique configurée pour commander le changement de profondeur de champ en fonction des conditions de fonctionnement du véhicule (1).

6. Véhicule selon l'une des revendications précédentes, **caractérisé en ce que** le véhicule (1) comprend une unité électronique configurée pour traiter les images capturées par ladite caméra (6) afin de compter le nombre de passagers qui entrent/sortent du véhicule (1).

7. Véhicule selon l'une des revendications précédentes, **caractérisé en ce que** le véhicule (1) comprend une unité électronique configurée pour traiter les images capturées par ladite caméra (6) pour permettre la reconnaissance de personnes le long d'une paroi latérale (2) du véhicule (1) lorsque ce dernier est en mouvement.

8. Véhicule selon l'une des revendications 5 à 7, **caractérisé en ce que** ladite unité de commande électronique est l'UCE du véhicule.
